# EUROPÄISCHE PATENTANMELDUNG

(11) **EP 0 528 098 A1**
(43) Veröffentlichungstag der Anmeldung: **24.02.1993**
(21) Anmeldenummer: 92100471.9
(22) Anmeldetag: 13.01.1992
(51) Int. Cl.: A23L 1/16

(54) **Kochfertige Teigware**

(30) Priorität: 20.07.1991 DE 4124130
(71) Anmelder: MEISTER GOLDEINUDEL RUDOLF GmbH, D-59602 Rüthen (DE)
(72) Erfinder: Rudolf, Jörg, W-4784 Rüthen-Meiste (DE)
(74) Vertreter: Bockermann, Rolf, Dipl.-Ing.

(57) **Zusammenfassung**

Die kochfertige Teigware wird durch Einteigen von Hartweizengrieß und Eiern, Formen dieser Teigmasse zu Nudeln sowie anschließender Trocknung der geformten Nudeln gebildet. Desweiteren werden zwecks Vitaminzufuhr und Anreicherung von Ballaststoffen ggf. Trockenfrüchte und Nüsse hinzugegeben. Wesentlich hierbei ist, daß der Teigmasse Haferflocken beim Einteigen zugegeben werden. Von Vorteil ist, daß der Hartweizengrieß, die Eier und die Haferflocken im Gewichtsmengenverhältnis von etwa 6,5 : 3 : 2 und pro Kilogramm Teigmasse 8 Eier eingeteigt werden.

## Beschreibung

Die Erfindung betrifft eine kochfertige Teigware, gebildet durch Einteigen von Hartweizengrieß und Eiern, Formen dieser Teigmasse zu Nudeln sowie anschließender Trocknung der geformten Nudeln.

Teigwaren der vorstehend beschriebenen Gattung bilden eine vorteilhafte Nahrung für den menschlichen Organismus, da in dieser Teigware vielfältige Nährstoffe enthalten sind.

In diesem Zusammenhang ist es durch die FR-PS 9 77 713 bei der Herstellung von Teigwaren bekannt, verschiedene Getreidemehle oder -grieße einzusetzen. Hierbei soll durch stickstoff- und phosphathaltige Stoffe ein schneller Wiederaufbau von lebenden Zellen des menschlichen Organismus sowie eine kräftige Stärkung der Nervenzellen erreicht werden.

Im Rahmen der US-PS 38 43 818 wird zur Schaffung einer Nudel mit einem niedrigen Kaloriengehalt zusätzlich auf die Verwendung von Haferschalen hingewiesen.

Schließlich zählt es durch die JP 60-126 041 A in: Patents Abstract of Japan, Sekt. C, Bd. 9 (1985), Nr. 278 (C-312) zum Stand der Technik, Kartoffelflocken bei der Nudelherstellung einzusetzen, um ohne Beeinträchtigung des Geschmacks eine kurze Kochzeit zu erzielen.

Der Erfindung liegt das Problem zugrunde, die eingangs beschriebene kochfertige Teigware derart weiter auszugestalten, daß sie in kurzer Zeit in der Lage ist, die bei stärkerer körperlicher Belastung verbrauchten Energien wieder aufzubauen.

Die Lösung dieses Problems besteht nach der Erfindung darin, daß der Teigmasse Haferflocken beim Einteigen zugegeben werden.

Durch die Zugabe von Haferflocken wird nunmehr eine Nudel geschaffen, die im Vergleich zu bekannten Nudeln ballaststoffreicher, eiweißreicher und aufgrund der essentiellen Fettsäuren auch vitaminreicher ist. Da Hafer unter allen herkömmlichen Getreidesorten die ernährungsphysiologisch wertvollste Art ist, wirkt sich die Zugabe von Haferflocken darüberhinaus sehr günstig auf den Cholesterinspiegel aus. Auch enthält Hafer besonders hochwertiges Eiweiß. Ferner liegt sein Pflanzenfettgehalt deutlich höher als bei anderen Getreidesorten. Schließlich ist es noch von Vorteil, daß sich im Haferkorn Mineralstoffe und Kohlenhydrate wie Stärke und Zucker befinden.

Mit der erfindungsgemäßen speziellen Mischung wird also eine Teigware geschaffen, die insbesondere den Organismus von Sportlern und Schwerarbeitern anregt und somit aktiviert. Dazu sind in der Nudel alle für den menschlichen Organismus wesentlichen Nährstoffe wie Eiweiße, die Vitamine A, B1 und B2, Kalium und Calcium sowie Ballaststoffe vorhanden.

Eine besonders vorteilhafte Ausführungsform der Erfindung besteht nach Patentanspruch 2 darin, daß der Hartweizengrieß, die Eier und die Haferflocken im Gewichtsmengenverhältnis von etwa 6,5 : 3 : 2 eingeteigt werden. Das heißt, es werden z. B. 6,5 kg 100 %iger Hartweizengrieß, 3 l/kg frisches Ei und 2 kg Haferflocken eingeteigt. Durch diese besondere Mischung kann ein hoher Eianteil pro Kilogramm Teigmasse zugegeben werden.

In diesem Zusammenhang besteht ein wesentliches weiterbildendes Merkmal gemäß Patentanspruch 3 darin, daß pro Kilogramm Teigmasse acht Eier eingeteigt werden. Hierdurch kann die Teigmasse noch vitaminreicher aufgewertet und mit einem höheren Anteil an Mineralien sowie mit mehr verwertbaren Kohlenhydraten ausgestattet werden.

Die Analyse einer Probe der erfindungsgemäßen Teigware hat folgende Werte:

| | |
|---|---|
| Wassergehalt (Seesand-Methode bei 105 °C) | 10,5 % |
| Trockensubstanz | 89,5 % |
| Gesamteiweiß (N x 6,25) | 16,8 % |
| Fett (nach Soxhlet) | 5,2 % |
| Asche | 2,2 % |
| Gesamtkohlenhydrate als Stärke berechnet (aus der Differenz) | 65,3 % |
| Gesamt-Ballaststoffe | 8,8 % |
| verwertbare Kohlenhydrate | 56,5 % |
| Cholesterin | 148 mg/100g |
| Eieranteil | 8 Eier pro kg Teigmasse |
| Vitamin B1 | 0,25 mg/100g |
| Vitamin B2 | 0,15 mg/100g |
| Natrium | 35 mg/100g |
| Kalium | 170 mg/100g |
| Calcium | 31 mg/100g |
| Der durchschnittliche physiologische Brennwert beträgt pro 100 g | 1444 J (340 kcal) |

Durch den Zusatz von Trockenfrüchten und Nüssen zur Haferflockennudel gemäß Patentanspruch 4 wird eine gesunde und ausgewogene Mahlzeit geschaffen. Der Verbraucher nimmt zusätzliche Vitamine auf und reichert die Ballaststoffe an. Hierbei erweist es sich als besonders vorteilhaft, daß Trockenfrüchte naturbelassenen Fruchtzucker enthalten. Mithin wird gezielt auf den Zusatz von Industriezucker verzichtet. Desweiteren werden jegliche Konservierungsstoffe und chemischen Zusätze vermieden.

Die Zubereitung einer vollwertigen Mahlzeit kann nach dem Mischen mit Milch innerhalb einer Kochzeit von etwa 10 bis 12 Minuten erfolgen.

## Patentansprüche

1. Kochfertige Teigware, gebildet durch Einteigen von Hartweizengrieß und Eiern, Formen dieser Teigmasse zu Nudeln sowie anschließender Trocknung dar geformten Nudeln, **dadurch gekennzeichnet,** daß der Teigmasse Haferflocken beim Einteigen zugegeben werden.

2. Teigware nach Patentanspruch 1, **dadurch gekennzeichnet,** daß der Hartweizengrieß, die Eier und die Haferflocken im Gewichtsmengenverhältnis von etwa 6,5 : 3 : 2 eingeteigt werden.

3. Teigware nach Patentanspruch 1 oder 2, **dadurch gekennzeichnet,** daß pro kg Teigmasse acht Eier eingeteigt sind.

4. Teigware nach einem der Patentansprüche 1 bis 3, **dadurch gekennzeichnet,** daß Trockenfrüchte und Nüsse zugegeben werden.
